# EUROPÄISCHE PATENTSCHRIFT

(11) **EP 2 238 376 B1**
(45) Veröffentlichungstag und Bekanntmachung des Hinweises auf die Patenterteilung: **03.08.2011**
(21) Anmeldenummer: 08871974.5
(22) Anmeldetag: 16.12.2008
(51) Int. Cl.: F16K 31/40

(54) **VORGESTEUERTES VENTIL, INSBESONDERE PROPORTIONAL-DROSSELVENTIL**
PILOTED VALVE, PARTICULARLY PROPORTIONAL THROTTLE VALVE
SOUPAPE PRÉCOMMANDÉE, NOTAMMENT SOUPAPE D'ÉTRANGLEMENT PROPORTIONNELLE

(30) Priorität: 29.01.2008 DE 102008006380
(43) Veröffentlichungstag der Anmeldung: 13.10.2010
(60) Teilanmeldung: 11003131.7
(73) Patentinhaber: Hydac Fluidtechnik GmbH, 66280 Sulzbach/Saar (DE)
(72) Erfinder: BILL, Markus, 66265 Heusweiler (DE); BRUCK, Peter, 66484 Althornbach (DE)
(74) Vertreter: Bartels, Martin Erich Arthur
(86) Internationale Anmeldenummer: PCT/EP2008/010681
(87) Internationale Veröffentlichungsnummer: WO 2009/095061

(56) Entgegenhaltungen:
- DE-A1- 10 343 608
- GB-A- 1 196 505
- US-A- 2 625 953
- US-A- 4 967 786
- US-A1- 2003 020 033
- US-A1- 2004 108 001

## Beschreibung

Die Erfindung bezieht sich auf ein vorgesteuertes Ventil, insbesondere vorgesteuertes Proportional-Drosselventil gemäß der Merkmalsausgestaltung des Oberbegriffes des Patentanspruches 1.

Proportional-Drosselventile werden in Fluidsystemen allgemein zur Steuerung von Volumenströmen eingesetzt. Hierbei haben sich direkt gesteuerte Ventile, bei denen, wie bei einem Schalt-Wegeventil, ein Proportional-Magnetsystem direkt auf einen Steuerkolben einwirkt, in solchen Fällen als weniger geeignet erwiesen, wo große Volumenströme, insbesondere bei hohen Differenzdrücken, zu steuern sind, weil gegebenenfalls auftretende Strömungskräfte die Betätigungskräfte des Magnetsystems überlagern und somit zu Fehlfunktionen führen.

Um dem zu begegnen ist es Stand der Technik, für solche Anwendungsfälle Ventile der eingangs angegebenen Gattung zu verwenden, also solche Proportional-Drosselventile, die über eine hydraulische Vorsteuerung verfügen. Wie sich gezeigt hat, treten jedoch auch beim Einsatz derartiger Ventile Probleme hinsichtlich des Betriebsverhaltens auf. Zwar trägt die mechanische Entkoppelung des Ventilkolbens vom Magnetsystem zur Verringerung von Instabilitäten bei, weil der Ventilkolben ausschließlich durch Fluiddruck bewegt ist, die Genauigkeit und Sicherheit der Funktion hängt jedoch maßgeblich vom Zustand der Strömungsblendeneinrichtung des Vorsteuersystemes ab. Bei einem Einsatz in einem Fluidsystem, bei dem das Fluid nicht frei von Schmutzbelastungen ist, würde eine Verstopfung der Blendenbohrung der Blendeneinrichtung zu einem unkontrollierten Öffnen des Ventils führen, was eine Gefährdung der Sicherheit bedeutet. Um dieser Gefahr vorzubeugen, wird die Blendenbohrung üblicherweise relativ groß, mit einem Durchmesser mit mehr als 0,5mm, ausgeführt. Da der Durchmesser des Vorsteuerventilsitzes zur Erfüllung der Ventilfunktion noch größer gewählt werden muss als der Durchmesser der Blendenbohrung, ergeben sich mehrere Probleme. Ein wesentlicher Nachteil ist, dass große Durchmesser von Blendenbohrung und Vorsteuerventilsitz zu einem großen Vorsteuervolumenstrom führen. Bei entsprechend großen Durckdifferenzen kann dieser Volumenstrom mehrere Liter/Min. betragen. Eine Feinsteuerung des Ventiles ist in diesem Volumenstrombereich nicht möglich.

Der am Vorsteuerventilsitz anstehende Differenzdruck erzeugt am mit dem Ventilsitz zusammenwirkenden Ventilkegel des Betätigungsgliedes eine resultierende Kraft, die diesen Ventilkegel in der Schließlage zu halten sucht. Insbesondere bei hohen Differenzdrücken wird somit bereits ein relativ großer Totstrom erforderlich, um das Betätigungsglied vom Vorsteuerventilsitz abzuheben. Nach der Freigabe des Vorsteuerventilsitzes tritt eine schnelle Druckabsenkung auf der Kolbenrückseite ein, wodurch sich auch die auf das Betätigungsglied wirkende Kraft wesentlich verringert. Bei jedoch unverändert großer Magnetkraft entsteht ein Kraftüberschuß des Magnetsystems. Dieser wirkt gegen die Kraft einer das Betätigungsglied üblicherweise gegen den Vorsteuerventilsitz hin vorspannenden Federanordnung, wodurch eine Öffnungsbewegung des Ventilkolbens unerwünscht sprunghaft erfolgt.

Durch die US-A-2 625 953 ist ein gattungsgemäßes vorgesteuertes Ventil, insbesondere vorgesteuertes Proportional-Drosselventil bekannt, mit einem Ventilkolben, der in einem Ventilgehäuse mit Fluidein- und -auslass in Längsrichtung verfahrbar geführt und durch an seiner Rückseite wirksamen Fluiddruck mit seiner Vorderseite gegen einen Haupt-Ventilsitz hin vorspannbar ist, mit einer Vorsteuerventileinrichtung, die ein mittels eines elektrisch ansteuerbaren Magnetsystems in der Längsrichtung bewegbares Betätigungsglied aufweist, das mit einem Vorsteuerventilsitz in einer Bohrung des Ventilkolbens zusammenwirkt, die dessen Rückseite mit dem Fluidauslass an der Kolbenvorderseite verbindet, und bei Freigabe des Vorsteuerventilsitzes den Fluiddruck an der Rückseite des Kolbens für eine Öffnungsbewegung abzubauen, wobei zum Aufbau des den Kolben gegen seine Schließstellung vorspannenden Fluiddruckes durch Zufuhr von Vorsteuerfluid eine Strömungsblendeneinrichtung, in Form eines Spaltes zwischen der Innenumfangsseite des Ventilgehäuses und der Außenumfangsseite des Ventilkolbens, zwischen der Kolbenrückseite und dem Fluideinlass des Gehäuses vorhanden ist, wobei die Strömungsblendeneinrichtung eine Einrichtung zum Durchführen einer Spaltfiltration des Vorsteuerfluids beinhaltet. Im Hinblick auf eine besonders funktionssichere und effektive Spaltfiltration lässt jedoch die bekannte Lösung noch Wünsche offen.

Ausgehend von diesem Stand der Technik stellt sich der Erfindung die Aufgabe, ein vorgesteuertes Ventil, insbesondere Proportional-Drosselventil, zur Verfügung zu stellen, das sich bei einfachem Aufbau durch ein besonders gutes und betriebssicheres Betriebsverhalten auszeichnet.

Erfindungsgemäß ist diese Aufgabe durch ein Ventil gelöst, das die Merkmale des Patentanspruches 1 in seiner Gesamtheit aufweist.

Dadurch, dass entsprechend dem kennzeichnenden Teil des Patentanspruches 1 die Strömungsblendeneinrichtung in einen Vorsteuerkanal eingesetzt ist, der sich mit zur Längsachse radial verlaufender Kanalachse in der Wand des Ventilgehäuses zwischen einer inneren Kanalmündung, die mit der Rückseite des Ventilkolbens in Fluidverbindung ist, und einer äußeren Kanalmündung erstreckt, die mit dem Fluideinlass in Verbindung ist, ist eine Bauweise ermöglicht, bei der die Einrichtung zur Spaltfiltration im Vorsteuerkanal in das Ventilgehäuse unmittelbar integriert ist.

Durch die erzielte Verringerung des Vorsteuervolumenstroms ist eine Feinsteuerung des Ventils ermöglicht, auch bei herrschenden hohen Druckdifferenzen und im Bereich kleiner, zu steuernder Fluid-Volumenströme. Zudem begünstigt die Verringerung des Durchmessers des Vorsteuerventilsitzes das stabile Betriebsverhalten beim Abheben des Ventilkegels des Betätigungsgliedes vom Vorsteuerventilsitz, wobei sprunghafte Bewegungen beim Öffnungsvorgang vermieden sind, wodurch wiederum die Feinsteuerung begünstigt wird.

Besondere Vorteile ergeben sich, wenn eine Spaltfiltration des Vorsteuerfluides vorgesehen ist. Bei entsprechender Spaltlänge kann die Spaltbreite, verglichen mit dem Öffnungsquerschnitt der betreffenden Blendenbohrung, derart klein gewählt werden, dass feinste Schmutzpartikel sicher zurückgehalten werden, jedoch aufgrund der Spaltlänge der erforderliche Strömungsquerschnitt für den Durchtritt des Vorsteuerfluides zur Verfügung steht.

Hierbei kann die Anordnung in vorteilhafter Weise so getroffen sein, dass der Vorsteuerkanal durch eine kreisrunde Kanalbohrung gebildet ist, in der die Blendeneinrichtung in Form eines runden Einsatzkörpers aufgenommen ist. Dieser ist so gestaltet, dass er sowohl die Blendenfunktion erfüllt als auch eine Komponente der Spaltfiltration bildet.

Hierbei kann die Anordnung so getroffen sein, dass der Einsatzkörper einen der inneren Kanalmündung zugekehrten, in der Kanalbohrung passend sitzenden Stopfenabschnitt und einen demgegenüber im Durchmesser verringerten, äußeren Abschnitt aufweist, an dem eine Blendenbohrung und eine Spaltfiltereinrichtung ausgebildet sind.

Bei einer besonders vorteilhaften und einfachen Bauweise ist im Stopfenabschnitt eine koaxiale Sackbohrung vorgesehen, die von der inneren Kanalmündung weg bis in den äußeren Abschnitt verläuft, wobei die Blendenbohrung in zur Kanalachse radialer Richtung zwischen der Sackbohrung und der Außenseite des den verringerten Durchmesser aufweisenden äußeren Abschnittes des Einsatzkörpers verläuft.

Mit einem derart gestalteten Einsatzkörper läßt sich die Spaltfiltereinrichtung auf besonders einfache Weise dadurch realisieren, dass der Durchmesser des äußeren Abschnittes des Einsatzkörpers derart gestuft ist, dass ein erster Längenbereich, in den die Blendenbohrung mündet, einen geringeren Durchmesser als ein sich nach außen anschließender Längenbereich aufweist, dessen Durchmesser so gewählt ist, dass mit der Wand des Vorsteuerkanals ein Ringspalt für die Spaltfiltration des Vorsteuerfluides gebildet wird. Die Länge des Ringspaltes entspricht somit der gesamten Umfangslänge des Einsatzkörpers oder der Länge des Innenumfanges des Vorsteuerkanals, wodurch sich die Möglichkeit eröffnet, die Spaltbreite so gering zu wählen, dass selbst feine Schmutzpartikel sicher zurückgehalten werden.

Eine besonders starke Verringerung der effektiven Blendenöffnungsgröße und damit des Vorsteuervolumenstromes ist erreichbar, wenn der im Einsatzkörper des Vorsteuerkanals befindlichen Blendenbohrung eine zweite Blendenbohrung nachgeschaltet ist.

Das erfindungsgemäß Ventil kann als stromlos geschlossene Version ausgebildet sein, wobei ein bei Bestromung ziehendes Magnetsystem vorgesehen ist. Hierbei kann die Anordnung so getroffen sein, dass das Betätigungsglied mittels eines Energiespeichers, vorzugsweise einer Federanordnung, für eine bei stromlosem Magnetsystem den Vorsteuerventilsitz sperrende Bewegung vorgespannt und bei Bestromung des Magnetsystems vom Vorsteuerventilsitz zurückziehbar ist. Alternativ kann das Ventil auch als stromlos offene Version (mit einem drückenden Magnetsystem) ausgeführt werden.

In der vorliegenden Beschreibung ist die Erfindung am Beispiel vorgesteuerter Proportional-Drosselventile erläutert, weil die erfindungsgemäß ermöglichte Verringerung der Öffnungsgrößen von Vorsteuer-Blendenbohrung (en) und Vorsteuerventilsitz besonders bei Drosselventilen im Hinblick auf stabiles Steuerverhalten von besonderem Vorteil ist. Die Benutzung einer erfindungsgemäßen Blendeneinrichtung mit integrierter Spaltfiltereinrichtung, gegebenenfalls in Verbindung mit einer Reihenschaltung von Blendenbohrungen, eignet sich jedoch generell auch für vorgesteuerte Ventile anderer Bauart, bei denen eine Reduzierung der Vorsteuerfluidmenge, ohne dabei die Verschmutzungsgefahr zu vergrößern, angestrebt wird. Als Beispiele können hier vorgesteuerte Druckbegrenzungs- sowie Druckregelventile genannt werden.

Nachstehend ist die Erfindung anhand der Zeichnung im Einzelnen erläutert. Es zeigen:
- Fig. 1 einen Längsschnitt eines vorgesteuerten Proportional-Drosselventis in Sitzausführung nach dem Stand der Technik;
- Fig. 2 einen gegenüber Fig. 1 stark vergrößert gezeichneten Ausschnitt des in Fig. 1 mit II bezeichneten Bezirks;
- Fig. 3 einen gegenüber Fig. 1 leicht vergrößert und abgebrochen gezeichneten Längsschnitt eines Ausführungsbeispieles des erfindungsgemäßen Proportional-Drosselventils, wobei in Blickrichtung auf die Fig. gesehen links oben das hydraulische Schaltsymbol für das erfindungsgemäße Ventil wiedergegeben ist; und
- Fig. 4 einen gegenüber Fig. 3 stark vergrößerten Ausschnitt des in Fig. 3 mit IV bezeichneten Bezirks.

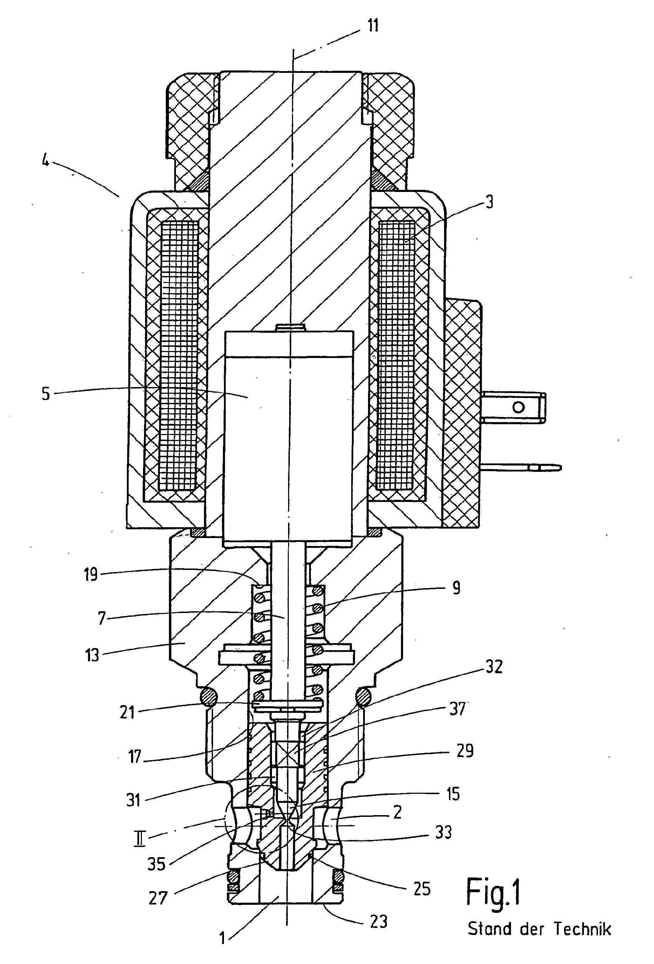

Das bekannte vorgesteuerte Proportional-Drosselventil in Sitzausführung nach der Fig. 1 ist mit einem elektrisch ansteuerbaren Magnetsystem 4 versehen. Derartige Magnetsysteme zum Ansteuern von Ventilen sind im Stand der Technik (DE 44 16 279 A1) hinreichend bekannt, wobei mittels einer Betätigungsspule 3 des Magnetsystems 4 ein Magnetanker 5 ansteuerbar ist. Bei der gezeigten Ausführungsform ist das Magnetsystem 4 als sogenannter ziehender weggesteuerter Proportionalmagnet ausgebildet, der im bestromten Zustand den Magnetanker 5 und damit ein mit diesem verbundenes Betätigungsglied 7 in Blickrichtung auf die Fig. 1 gesehen von unten nach oben bewegt. Im unbestromten Zustand wird der Anker 5 und damit das Betätigungsglied 7 über eine durch eine Druckfeder 9 gebildete Energiespeichereinrichtung nach unten zurückgestellt, d. h. in eine Axialposition bezüglich der Längsachse 11 eingestellt, die dem Schließzustand des Drosselventiles entspricht.

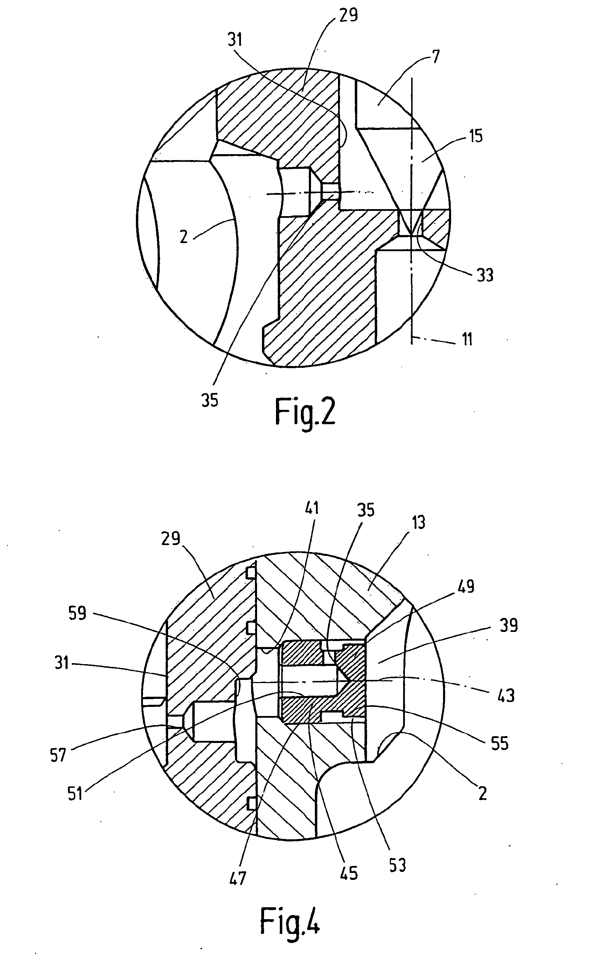

Das Gehäuse des Magnetsystems 4 ist unter Bildung einer Abdichtung mit einem Ventilgehäuse 13 verbunden, in dessen zur Längsachse 11 konzentrischer, durchgehender Bohrung 17 sich das Betätigungsglied 7 hinein erstreckt, dessen spitz zulaufendes Ende einen Vorsteuerventilkegel 15 bildet. Die Bohrung 17 im Ventilgehäuse 13 ist gestuft. Eine dem Magnetsystem 4 benachbarte Stufe 19 bildet die Abstützung für die Feder 9, deren anderes Ende an einem Bund 21 des Betätigungsgliedes 7 abgestützt ist. In der Nähe des Austrittsendes 23 des Ventilgehäuses 13, an dem sich der als Anschluss 1 bezeichnete Fluidaustritt des Ventiles befindet, ist ein Haupt-Ventilsitz 25 ausgebildet, der mit einer Feinsteuerfläche 27 am Ende eines als HauptVentilkörper fungierenden Ventilkolbens 29 zusammen wirkt. Der Ventilkolben 29 ist umfänglich in dem Abschnitt der Gehäusebohrung 17 längs verfahrbar geführt, der sich in der Fig. 1 gesehen nach oben an den Fluideingang anschließt, der als Anschluss 2 bezeichnet ist. Der Ventilkolben 29 seinerseits weist eine zur Längsachse 11 konzentrische Innenbohrung 31 auf, die sich in einem Abstand von dem dem Anschluss 1 zugekehrten Ende zur Bildung eines Vorsteuerventilsitzes 33 verjüngt, der, wie am besten aus Fig. 2 zu ersehen ist, mit dem Vorsteuer-Ventilkegel 15 am Ende des Betätigungsgliedes 7 zusammenwirkt. Wie aus dieser Fig. ebenfalls am deutlichsten zu entnehmen ist, erstreckt sich vom Fluidanschluss 2 ausgehend, eine Blendenbohrung 35 im Ventilkolben 29 in dessen Innenbohrung 31 hinein, wodurch vom Fluidanschluss 2 her ein Fluiddruck an der Kolbenrückseite des Ventilkolbens 29 aufbaubar ist, der den Ventilkolben 29 in Fig. 1 nach unten in die Schließstellung vorspannt, in der seine Steuerfläche 27 am Haupt-Ventilsitz 25 schließend anliegt.

In dem in Fig. 1 oberhalb des Vorsteuerventilsitzes 33 gelegenen Abschnitt bildet die Innenbohrung 31 einen Führungsabschnitt 32, der als Gleitführung für einen Führungskanten aufweisenden Führungskörper 37 des Betätigungsgliedes 7 dient.

Durch Druckaufbau an der Rückseite des Ventilkolbens 29 durch Fluid, das vom Anschluss 2 her über die Blendenbohrung 35 in die Innenbohrung 31 des Ventilkolbens 29 eintritt, ist der Ventilkolben 29 in seiner Schließposition gehalten. Wird das Betätigungsglied 7 durch Bestromen des Magnetsystemes 4 zurückgezogen, so dass der Ventilkegel 15 vom Vorsteuerventilsitz 33 abhebt, entsteht an der Kolbenrückseite ein Druckabfall, so dass vom Anschluss 2 her am Ventilkolben 29 wirkender Fluiddruck eine Öffnungsbewegung des Kolbens 29 hervorruft und damit einen Fluidaustritt am Anschluss 1, wobei diesem Fluidstrom der Vorsteuerfluidstrom überlagert ist, der aus der Dimensionierung der Blendenbohrung 35 und des Vorsteuerventilsitzes 33 resultiert.

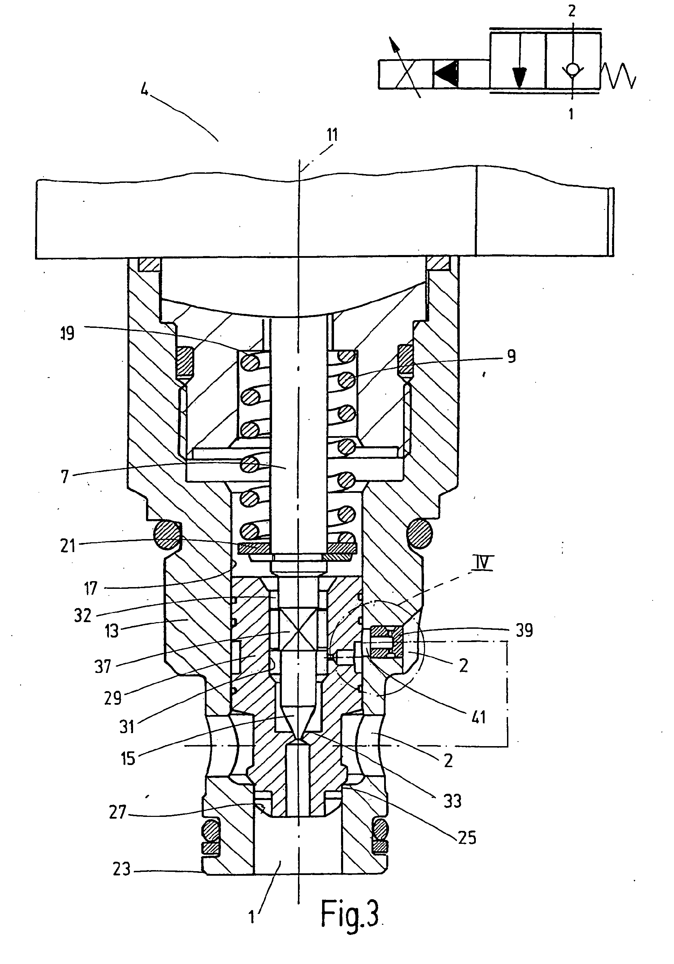

Das in Fig. 3 und 4 gezeigte Ausführungsbeispiel des erfindungsgemäßen Ventils unterscheidet sich gegenüber Fig. 1 und 2 insbesondere dadurch, dass an Stelle der Blendenbohrung 35, die sich unmittelbar durch die Wand des Kolbens 29 vom Anschluss 2 her in die Innenbohrung 31 des Kolbens 29 erstreckt, eine Strömungsblendeneinrichtung 39 vorhanden ist, die in einem Vorsteuerkanal 41, der sich mit einer zur Längsachse 11 radial verlaufenden Kanalachse 43 innerhalb der Wand des Ventilgehäuses 13 erstreckt, eingebaut ist. Für nähere Einzelheiten dieser Blendeneinrichtung 39 wird auf Fig. 4 Bezug genommen. Die Blendeneinrichtung 39 ist, genauer gesagt, eine kombinierte Blenden- und Filtereinrichtung. Diese weist einen runden Einsatzkörper 45 auf, dessen innerer, der inneren Mündung des Vorsteuerkanals 41 zugewandter Stopfenabschnitt 47 in dem runden Vorsteuerkanal 41 passend aufgenommen ist. An diesen inneren Stopfenabschnitt 47 schließt sich ein äußerer Abschnitt 49 an, der gegenüber dem Stopfenabschnitt 47 einen geringeren Außendurchmesser aufweist, wobei dieser Außendurchmesser gestuft ist. Vom Ende des Stopfenabschnittes 47 her erstreckt sich eine zur Kanalachse 43 konzentrische Sackbohrung 51 bis zum äußeren Abschnitt 49.

Aus dem Bereich des Grundes der Sackbohrung 51 erstreckt sich die Blendenbohrung 35, zur Achse 43 radial verlaufend, zum gestuften Außenumfang des im Durchmesser verringerten äußeren Abschnittes 49. Dieser Abschnitt ist, wie vorstehend erwähnt gestuft. Genauer gesagt, schließt sich an die äußere Mündung der Blendenbohrung 35 ein im Durchmesser wieder vergrößerter Endabschnitt 53 an, dessen Durchmesser so gewählt ist, dass mit der Wand des Vorsteuerkanals 41 ein feiner Ringspalt 55 gebildet wird, der als Spaltfilter wirkt, über den Vorsteuerfluid vom Anschluss 2 her zur Blendenbohrung 35 gelangen kann. Dabei ist die Spaltweite des Ringspaltes 55 so gewählt, dass selbst feine Schmutzpartikel zurückgehalten werden. Da die Länge des Ringspaltes 55 jedoch der gesamten Umfangslänge des äußeren Endabschnittes 53 und des Innenumfanges des Vorsteuerkanals 41 entspricht, führt die Anlagerung eines Partikels an einem Bruchteil der Ringspaltlänge nicht zu einer Verstopfung des Fluiddurchtrittes. Auch ist selbst bei sehr klein dimensionierter Öffnungsgröße der Blendenbohrung 35 ein störungssicherer Betrieb gewährleistet.

Bei besonders vorteilhaften Ausführungsbeispielen ist in ähnlicher Lageanordnung, wie dies bei der im Stand der Technik üblichen Blendenbohrung 35 der Fall ist, im Ventilkolben 29 selbst eine zusätzliche, zweite Blendenbohrung 57 vorgesehen, die der Blendenbohrung 35 in der Blendeneinrichtung 39 nachgeschaltet ist. Diese zusätzliche Blendenbohrung 57 befindet sich in einem im Durchmesser verringerten Umfangsabschnitt 59 des Ventilkolbens 29 und verbindet diesen Umfangsabschnitt 59 mit der Innenbohrung 31 im Ventilkolben 29. Die Axialposition des Umfangsabschnittes 59 ist so gewählt, dass die nachgeschaltete, zweite Blendenbohrung 57 bei den im Betrieb vorkommenden Axialpositionen des Ventilkolbens 29 auf die innere Kanalmündung des Vorsteuerkanals 41 ausgerichtet ist.

Das erfindungsgemäße Ventil kann sowohl für mittlere als auch große Volumenströme eingesetzt werden, insbesondere, wenn eine leckagefreie Abdichtung im geschlossenen Zustand erforderlich ist und das Ventil sowohl mit sehr niedrigen Eingangsdrücken an Anschluss 2 (ca. 1 bar) als auch mit hohen Drücken (bis ca. 350 bar) eingesetzt werden soll.

## Patentansprüche

1. Vorgesteuertes Ventil, insbesondere vorgesteuertes Proportional-Drosselventil, mit einem Ventilkolben (29), der in einem Ventilgehäuse (13) mit Fluidein- (2) und -auslass (1) in Längsrichtung verfahrbar geführt und durch an seiner Rückseite wirksamen Fluiddruck mit seiner Vorderseite (27) gegen einen Haupt-Ventilsitz (25) hin vorspannbar ist, mit einer Vorsteuerventileinrichtung, die ein mittels eines elektrisch ansteuerbaren Magnetsystems (4) in der Längsrichtung bewegbares Betätigungsglied (7) aufweist, das mit einem Vorsteuerventilsitz (33) in einer Bohrung (31) des Ventilkolbens (29) zusammenwirkt, die dessen Rückseite mit dem Fluidauslass (1) an der Kolbenvorderseite verbindet, um bei Freigabe des Vorsteuerventilsitzes (33) den Fluiddruck an der Rückseite des Kolbens (29) für eine Öffnungsbewegung abzubauen, wobei zum Aufbau des den Kolben (29) gegen seine Schließstellung vorspannenden Fluiddruckes durch Zufuhr von Vorsteuerfluid eine Strömungsblendeneinrichtung (39) zwischen Kolbenrückseite und dem Fluideinlass (2) des Gehäuses (13) vorhanden ist, und wobei die Strömungsblendeneinrichtung (39) eine Einrichtung (41, 45, 55,56) zum Durchführen einer Spaltfitration des Vorsteuerfluides beinhaltet, **dadurch gekennzeichnet, dass** die Strömungsblendeneinrichtung (39) in einen Vorsteuerkanal (41) eingesetzt ist, der sich mit zur Längsachse (11) radial verlaufender Kanalachse (43) in der Wand des Ventilgehäuses (13) zwischen einer inneren Kanalmündung, die mit der Rückseite des Ventilkolbens (29) in Fluidverbindung ist, und einer äußeren Kanalmündung erstreckt, die mit dem Fluideinlass (2) in Verbindung ist.

2. Ventil nach Anspruch 1, **dadurch gekennzeichnet, dass** der Vorsteuerkanal (41) durch eine kreisrunde Kanalbohrung gebildet ist, in der die Blendeneinrichtung (39) in Form eines runden Einsatzkörpers (45) aufgenommen ist.

3. Ventil nach Anspruch 2, **dadurch gekennzeichnet, dass** der Einsatzkörper (45) einen der inneren Kanalmündung zugekehrten, in der Kanalbohrung passend sitzenden Stopfenabschnitt (47) und einen demgegenüber im Durchmesser verringerten, äußeren Abschnitt (49) aufweist, an dem eine Blendenbohrung (35) und eine Spaltfiltereinrichtung (55) ausgebildet sind.

4. Ventil nach Anspruch 3, **dadurch gekennzeichnet, dass** im Stopfenabschnitt (47) eine koaxiale Sackbohrung (51) vorgesehen ist, die von der inneren Kanalmündung weg bis in den äußeren Abschnitt (49) verläuft, und dass die Blendenbohrung (35) in zur Kanalachse (43) radialer Richtung zwischen der Sackbohrung (51) und der Außenseite des den verringerten Durchmesser aufweisenden äußeren Abschnittes (49) des Einsatzkörpers (45) verläuft.

5. Ventil nach Anspruch 4, **dadurch gekennzeichnet, dass** der Durchmesser des äußeren Abschnittes (49) des Einsatzkörpers (45) derart gestuft ist, dass ein erster Längenbereich, in den die Blendenbohrung (35) mündet, einen geringeren Durchmesser als ein sich nach außen anschließender, endseitiger Längenbereich (53) aufweist, dessen Durchmesser so gewählt ist, dass mit der Wand des Vorsteuerkanals (41) ein Ringspalt (55) für die Spaltfiltration des Vorsteuerfluides gebildet wird.

6. Ventil nach einem der Ansprüche 1 bis 5, **dadurch gekennzeichnet, dass** die Bohrung (31) des Ventilkolbens(29) einen von der Kolbenrückseite ausgehenden Führungsabschnitt (32) aufweist, in dem das einen Ventilkegel (15) für die Zusammenwirkung mit dem Vorsteuerventilsitz (33) aufweisende Betätigungsglied (7) geführt ist, und dass der Ventilkolben (29) einen im Durchmesser verringerten Umfangsabschnitt (59) aufweist, in dem sich ein Durchgang für den Eintritt von die Blendeneinrichtung (39) durchströmenden Vorsteuerfluides in den Führungsabschnitt (32) der Bohrung (31) des Ventilkolbens (29) hinein befindet.

7. Ventil nach Anspruch 6, **dadurch gekennzeichnet, dass** der im Durchmesser verringerte Umfangsabschnitt (59) des Ventilkolbens (29) hinsichtlich axialer Länge und axialer Position derart gestaltet ist, dass er bei den im Betrieb möglichen Axialpositionen des Ventilkolbens (29) mit der inneren Kanalmündung des Vorsteuerkanals (41) in Verbindung ist.

8. Ventil nach Anspruch 7, **dadurch gekennzeichnet, dass** im Durchgang des Ventilkolbens eine zweite Blendenbohrung (57) vorhanden ist, die der Blendenbohrung (35) im Einsatzkörper (45) der Blendeneinrichtung (39) nachgeschaltet ist.

## Claims

1. A piloted valve, in particular a piloted proportional throttle valve, comprising a valve piston (29) which is guided to be able to move in a valve housing (13) with a fluid inlet (2) and a fluid outlet (1) in the longitudinal direction, and which can be pressurised by fluid pressure active on its rear side with its front side (27) against a main valve seat (25), comprising a pilot valve device which has an actuating element (7) which can be moved in the longitudinal direction by means of an electrically triggerable magnet system (4) and which interacts with a pilot valve seat (33) in a bore (31) of the valve piston (29) which connects the rear side of the latter to the fluid outlet (1) on the front side of the piston in order to reduce the fluid pressure on the rear side of the piston (29) for an opening motion when the pilot valve seat (33) is cleared, to build up the fluid pressure pressurising the piston (29) against its closed position by supplying pilot fluid a flow baffle device (39) being provided between the rear side of the piston and the fluid inlet (20) of the housing (13), and the flow baffle device (39) including a deivce (41, 45, 55, 56) for implementing gap filtration of the pilot fluid, **characterised in that** the flow baffle device (39) is inserted into a pilot channel (41) which extends with the channel axis (43) running radially to the longitudinal axis (11) in the wall of the valve housing (13) between an inner channel mouth, which is fluid-connected to the rear side of the valve piston (29), and an outer channel mouth which is connected to the fluid inlet (2).

2. The valve according to Claim 1, **characterised in that** the pilot channel (41) is formed by a circular channel bore in which the baffle device (39) is held in the form of a round insert body (45).

3. The valve according to Claim 2, **characterised in that** the insert body (45) has a plug section (47) facing towards the inner channel mouth and which sits appropriately in the channel bore, and an outer section . (49) which in comparison is reduced in diameter, and on which a baffle bore (35) and a gap filter device (55) are formed.

4. The valve according to Claim 3, **characterised in that** in the plug section (47) there is a coaxial blind hole (51) which runs away from the inner channel mouth into the outer section (49), and that in the direction which is radial to the channel axis (43) the baffle bore (35) runs between the blind hole (51) and the outside of the outer section (49) of the insert body (45) having the reduced diameter.

5. The valve according to Claim 4, **characterised in that** the diameter of the outer section (49) of the insert body (45) is stepped such that in a first region of length into which the baffle bore (35) discharges, has a smaller diameter than an end-side region of length (53) which follows to the outside, the diameter of which is chosen such that an annular gap (55) for gap filtration of the pilot fluid is formed with the wall of the pilot channel (41).

6. The valve according to any of Claims 1 to 5, **characterised in that** the bore (31) of the valve piston (29) has a guide section (32) proceeding from the rear side of the piston and in which the actuating element (7) which has a valve cone (15) for interaction with the pilot valve seat (33) is guided, and that the valve piston (29) has a peripheral section (59) which is reduced in diameter and in which there is a passage for entry of the pilot fluid flowing through the baffle device (39) into the guide section (32) of the bore (31) of the valve piston (29).

7. The valve according to Claim 6, **characterised in that** the peripheral section (59) of the valve piston (29), which section has been reduced in diameter, with respect to axial length and axial position is formed such that, in the axial positions of the valve piston (29) which are possible in operation, it is connected to the inner channel mouth of the pilot channel (41).

8. The valve according to Claim 7, **characterised in that** in the passage of the valve piston there is a second baffle bore (57) which is connected downstream of the baffle bore (35) in the insert body (45) of the baffle device (39).

## Revendications

1. Soupape pilotée notamment soupape d'étranglement proportionnel pilotée, comprenant un piston (29) de soupape, qui est guidé de manière à pouvoir être déplacé dans la direction longitudinale dans un corps (13) de soupape ayant une entrée (2) et une sortie (1) pour du fluide et qui peut être précontraint sur un siège (25) principal de soupape par sa face (27) avant par une pression de fluide active sur sa face arrière, comprenant un dispositif de soupape pilote, qui comporte un organe (7) d'actionnement mobile dans la direction longitudinale au moyen d'un système (4) d'aimant pouvant être commandé électriquement, organe qui coopère avec un siège (33) de soupape pilote dans un trou (31) du piston (29) de soupape, trou qui met en communication la face arrière du piston avec la sortie (1) de fluide sur la face avant du piston pour, lorsque le siège (33) de la soupape pilote est dégagé, supprimer pour un mouvement d'ouverture la pression du fluide sur la face arrière du piston (29), dans laquelle, pour établir la pression du fluide précontraignant le piston (29) vers sa position de fermeture par apport de fluide de pilotage, il y a un dispositif (39) faisant écran à l'écoulement entre la face arrière du piston et l'entrée (2) de fluide du corps (13), et dans laquelle le dispositif (29) faisant écran à l'écoulement comporte un dispositif (41, 45, 55, 56) pour effectuer une filtration par disque du fluide de pilotage, **caractérisée en ce que** le dispositif (39) faisant écran à l'écoulement est inséré dans un canal (41) de pilotage, qui s'étend, par un axe (43) de canal s'étendant radialement à l'axe (11) longitudinal, dans la paroi du corps (13) de la soupape entre une embouchure intérieure de canal, qui est en communication fluidique avec la face arrière du piston (29) de la soupape, et une embouchure extérieure de canal, qui est en communication avec l'entrée (2) de fluide.

2. Soupape suivant la revendication 1, **caractérisée en ce que** le canal (41) de pilotage est formé par un trou de canal circulaire dans lequel le dispositif (39) formant écran est reçu sous la forme d'une pièce (45) rapportée circulaire.

3. Soupape suivant la revendication 2, **caractérisée en ce que** la pièce (45) rapportée comporte une partie (47) d'arrêt tournée vers l'embouchure intérieure du canal et reposant de manière adaptée dans le trou de canal et une partie (49) extérieure de diamètre moindre et sur laquelle sont formés un trou (35) d'écran et un dispositif (55) de filtre à fente.

4. Soupape suivant la revendication 3, **caractérisée en ce que** dans la partie (47) d'arrêt est prévu un trou (51) borgne coaxial, qui s'étend de l'embouchure intérieure du canal à la partie (49) extérieure et **en ce que** le trou (35) d'écran s'étend dans la direction radiale à l'axe (43) du canal entre le trou borgne (51) et le côté extérieur de la partie (49) extérieure de la pièce (45) rapportée de moindre diamètre.

5. Soupape suivant la revendication 4, **caractérisée en ce que** le diamètre de la partie (49) extérieure de la pièce (45) rapportée est étagée de manière à ce qu'une première partie longitudinale dans laquelle débouche le trou (35) d'écran ait un diamètre plus petit qu'une partie (53) longitudinale du côté de l'extrémité et se raccordant vers l'extérieur, dont le diamètre est choisi de manière à former avec la paroi du canal (41) de pilotage une fente (55) annulaire pour la filtration par fente du fluide de pilotage.

6. Soupape suivant l'une des revendications 1 à 5, **caractérisée en ce que** le trou (31) du piston (29) de la soupape comporte une partie (32) de guidage qui part de la face arrière du piston et dans laquelle est guidé l'organe (7) d'actionnement ayant un cône (15) de soupape pour la coopération avec le siège (33) de la soupape pilote et **en ce que** le piston (39) de la soupape a une partie (59) périphérique de moindre diamètre, dans laquelle se trouve un passage pour l'entrée du fluide de pilotage, passant par le dispositif (39) d'écran, dans la partie (32) de guidage du trou (31) du piston (29) de la soupape.

7. Soupape suivant la revendication 6, **caractérisée en ce que** la partie (59) périphérique de moindre diamètre du piston (29) de la soupape est conformée pour ce qui concerne sa longueur axiale et sa position axiale de manière à être en liaison avec l'embouchure intérieure du canal (41) de pilotage dans les positions axiales possibles en fonctionnement du piston (29) de la soupape.

8. Soupape suivant la revendication 7, **caractérisée en ce que** dans le passage du piston de la soupape il y a un deuxième trou (57) d'écran, qui est monté en aval du trou (35) d'écran dans la pièce (45) rapportée du dispositif (39) d'écran.
